# EUROPEAN PATENT SPECIFICATION

(11) **EP 3 443 038 B1**
(45) Date of publication and mention of the grant of the patent: **18.08.2021**
(21) Application number: 17734871.1
(22) Date of filing: 17.04.2017
(51) Int. Cl.: C09C 1/42, C04B 35/195, C04B 33/04, B28C 1/02, C04B 33/14, C04B 35/626

(54) **METHODS OF MAKING HYDROUS KAOLIN CLAY AND PRODUCTS MADE THEREOF**
VERFAHREN ZUR HERSTELLUNG VON WASSERHALTIGEM KAOLINTON UND DARAUS HERGESTELLTE PRODUKTE
PROCÉDÉS DE FABRICATION D'ARGILE DE KAOLIN HYDRATÉE ET PRODUITS FABRIQUÉS À PARTIR DE CELLE-CI

(30) Priority: 15.04.2016 US 201662323347 P
(43) Date of publication of application: 20.02.2019
(73) Proprietor: BASF Corporation, Florham Park, NJ 07932 (US)
(72) Inventor: YILDIRIM, Ismail, Tega Cay South Carolina 29708 (US); MATHUR, Sharad, Tega Cay South Carolina 29708 (US)
(74) Representative: BASF IP Association
(86) International application number: PCT/US2017/027893
(87) International publication number: WO 2017/181169

(56) References cited:
- EP-B1- 1 765 933
- EP-B1- 1 791 914
- WO-A1-2011/022081
- WO-A2-2010/022115

## Description

### FIELD OF THE DISCLOSURE

This disclosure relates generally to hydrous kaolin clays, particularly to blended hydrous kaolin clays for use in compositions such as industrial coatings, paints, inks, films, adhesives, and ceramic honeycomb products.

### BACKGROUND OF THE DISCLOSURE

Kaolin occurs naturally in the hydrous form and exists as crystalline structures containing hydroxyl functionality. Kaolin deposits, however, are sedimentary and is therefore frequently contaminated with impurities that detracts from its brightness and value. For this and other reasons, much attention and research in the kaolin industry has focused on refining kaolins and removing the major impurities.

Hydrous kaolins may contain mineral components, such as alkali and alkaline earth metal oxides. In addition, alkali-based dispersants are sometimes used during the primary dispersion stage of raw kaolins to aid subsequent physical separation to enhance the properties of the final kaolin product. Alkali metal oxides include, but are not limited to, sodium oxide (Na₂O) and potassium oxide (K₂O). Kaolin can include an alkali and alkaline earth metal oxide content of 2% by weight or greater, such as at least about 5% by weight, relative to the total weight of the kaolin. However, these levels of alkali and alkaline earth metal oxides can have a deleterious effect in some applications, such as, for example, in the case of catalyst substrates used in catalytic converters wherein excess alkali metal contamination can cause at least one of decreasing the number of NO₂ adsorption sites, increasing the coefficient of thermal expansion (where the catalytic converter is a ceramic), or generally weakening the structural properties of the ceramic. Furthermore, the ability of catalyst substrates to effectively function in catalytic converters may depend in part on the particle size of the catalyst substrate.

EP 1791914 B1 discloses a method of processing kaolin comprising sequentially subjecting kaolin crude to flotation, centrifuging and refining.

WO 2010/022115 A2 discloses a blend of hydrous kaolin clay and a method for making cordierite using the blend of hydrous kaolin clay.

WO 2011/022081 A1 also discloses a blend of hydrous kaolin clay and a method for making cordierite using the blend of hydrous kaolin clay.

EP 1765933 B1 discloses a method of processing kaolin comprising sequentially subjecting kaolin crude to flotation, ozonating, centrifuging, and refining.

There is an on-going unmet need in the art for hydrous kaolin product with both a finer and steeper particle size distribution and useful performance properties and methods of producing same in order to improve performance in various applications. A need also exists for improved materials derived from hydrous kaolin products, such as substrate materials for catalytic ceramic applications. The materials and methods disclosed herein address these and other needs.

### SUMMARY OF THE DISCLOSURE

Disclosed herein are methods of forming a hydrous kaolin clay product.

The method of forming the hydrous kaolin clay product can include (i) refining a tertiary, fine crude kaolin clay having a first alkali content, to form an ultra- fine, hydrous kaolin stream. The alkali content is based on the total amount of sodium oxide and potassium oxide. The first alkali content (i.e., of the tertiary, fine crude kaolin clay) can be greater than 0.2% by weight, based on the total weight of the tertiary, fine crude kaolin clay. Refining the tertiary, fine crude kaolin clay can include selective flocculation and ozonating to provide the fine, hydrous kaolin stream having a second alkali content that is less than the first alkali content. The ultra- fine, hydrous kaolin stream can include particles wherein at least 90% or at least 95% of the particles by weight have a diameter of 1 micron or less. The ultra- fine, hydrous kaolin stream can exhibit an average crystallite size of from 200 Å to 450 Å, as measured using X-Ray Diffraction (XRD).

The method of forming the hydrous kaolin clay product can include providing an ultrafine hydrous kaolin stream. The ultrafine hydrous kaolin stream can include particles wherein at least 70% by weight have a diameter of 0.3 micron or less. The average crystallite size of the particles in the ultrafine hydrous kaolin stream can be from 200 Å to 400 Å. In some embodiments, providing the ultrafine hydrous kaolin stream can include centrifuging

The method of forming the hydrous kaolin clay product can include (ii) refining the ultrafine hydrous kaolin stream into an ultrafine hydrous kaolin clay. Refining the ultrafine hydrous kaolin stream can include flocculation (using for example acid and alum), bleaching, filtering, re-dispersing (using for example ammonia based dispersants), spray drying, pulverizing, or combinations thereof. The hydrous kaolin clay product can have a total alkali content of 0.2% or less by weight of the hydrous kaolin clay product. In some embodiments, the hydrous kaolin clay product can have a total alkali content of 0.15% by weight or less, based on the total weight of the hydrous kaolin clay product. The sodium oxide content of the hydrous kaolin clay product can be 0.05% by weight or less, and the potassium oxide content can be 0.10% by weight or less, based on the total weight of the hydrous kaolin clay product. The hydrous kaolin clay product can be free of or include trace amounts of an organic material.

In some embodiments, the ultrafine hydrous kaolin stream can be further blended with a refined, delaminated, coarse kaolin clay, prior to refining the ultrafine hydrous kaolin stream. The method can include refining a cretaceous white, delaminated, coarse crude kaolin clay to form a refined, white, delaminated, coarse kaolin clay. The refined, white, delaminated, coarse kaolin clay can include particles wherein at least 75% or at least 80% of the particles by weight have a diameter of 2 microns or less. The refined, white, delaminated, coarse kaolin clay can exhibit an average crystallite size of from 600 Å to 950 Å. The iron oxide content of the refined, white, delaminated coarse kaolin clay can be from 0.3% to 0.5% by weight, based on the weight of the refined, white, delaminated coarse kaolin clay. The ultrafine hydrous kaolin stream and the refined, delaminated, coarse kaolin clay can be blended in a weight ratio of from 95:5 to 5:95.

Compositions and methods of making the compositions comprising the hydrous kaolin clay product are also described herein. For example, compositions comprising the hydrous kaolin clay include plastics, adhesives, papers such as thermal papers, fillers, ceramics or coatings (such as industrial coatings, paints, and inks). In some examples, the composition can be a paint, such as a high gloss paint, a semi-gloss paint or a flat paint.

In some embodiments, the composition can be a cordierite ceramic. Methods of making the cordierite ceramics from the ultrafine kaolin clay are described herein. The method can include preparing a precursor cordierite batch composition comprising an ultrafine hydrous kaolin clay produced as described herein. The precursor cordierite batch composition can further comprise talc, alumina, aluminum hydroxide, silica, a binder, a lubricant, or a combination thereof. The amount of ultrafine hydrous kaolin clay can be from 10% to 30% by weight of the precursor cordierite batch composition. The precursor cordierite batch composition can be extruded into a green body and then sintered to obtain the cordierite ceramic.

The cordierite ceramic formed from the methods described herein can have a honeycomb structure. The cordierite ceramic can exhibit a coefficient of thermal expansion (25°C to 800°C) of 1.25 x 10⁻⁶/°C or less.

Substrate comprising the cordierite ceramics described herein are also disclosed. The substrate can be an automotive catalytic substrate or a diesel particulate filter.

### BRIEF DESCRIPTION OF THE DRAWINGS

The accompanying drawings, which are incorporated in and constitute a part of this specification, illustrate several embodiments of the disclosure and together with the description, serve to explain the principles of the disclosure.
**Figure 1** is a flow chart showing an exemplary method for preparing an ultrafine hydrous kaolin clay, as described herein.
**Figure 2** is a flow chart showing an exemplary method for preparing a blended kaolin clay, as described herein.
**Figure 3** is a line graph comparing the coefficient of thermal expansion of a blended kaolin clay (green line) and a control (red line).
**Figure 4** is a line graph comparing the % relative coefficient of thermal expansion of a blended kaolin clay (red line) and a control (green line).
**Figure 5** is a flow chart showing an exemplary method for preparing a coarse hydrous kaolin clay, as described in Example 3.
**Figure 6** is a flow chart showing an exemplary method for preparing a fine hydrous kaolin clay, as described in Example 4.
**Figure 7** is a flow chart showing an exemplary method for preparing an ultrafine hydrous kaolin clay, as described in Example 5.

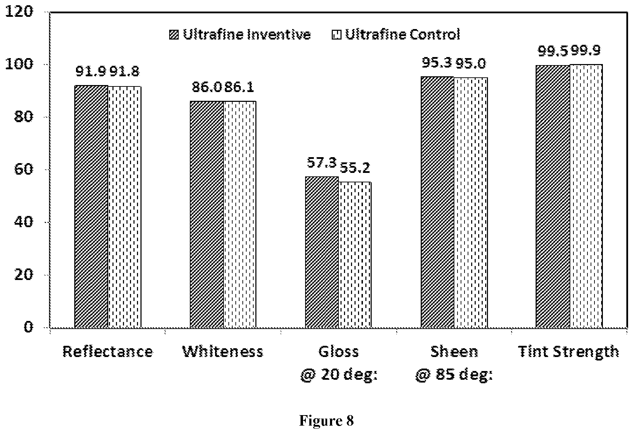

**Figure 8** is a bar graph comparing various optical properties of a high gloss paint composition with the ultrafine pigment.

### DETAILED DESCRIPTION

The term "comprising" and variations thereof as used herein is used synonymously with the term "including" and variations thereof and are open, non-limiting terms. Although the terms "comprising" and "including" have been used herein to describe various embodiments, the terms "consisting essentially of' and "consisting of' can be used in place of "comprising" and "including" to provide for more specific embodiments and are also disclosed. As used in this disclosure and in the appended claims, the singular forms "a", "an", "the", include plural referents unless the context clearly dictates otherwise. The disclosure of percentage ranges and other ranges herein includes the disclosure of the endpoints of the range and any integers provided in the range.

Disclosed herein are compositions comprising an ultrafine hydrous kaolin clay. Generally, the properties of the ultrafine hydrous kaolin clay are dependent on attributes, such as particle size, shape, and texture of the individual particles and of agglomerates thereof. In some aspects, the ultrafine hydrous kaolin clay can include a blend of a refined, white, coarse kaolin clay and a refined, fine, hydrous kaolin clay. Methods of making and using the ultrafine hydrous kaolin clay are also described herein.

### Fine Kaolin Clay

The refined, fine, hydrous kaolin clay can be derived from a tertiary, fine crude kaolin clay using the methods described herein. The refined, fine, hydrous kaolin clay is also referred to herein as a fine, hydrous kaolin clay. The tertiary, fine crude kaolin clay can be mined from a tertiary crude deposits. Kaolin crudes have physical properties that reflect the time period in which they were formed. Tertiary crudes are typically finer in size, have different trace elemental profiles such as higher Fe₂O₃ content, and have higher densities than clays deposited at other time periods. Tertiary deposit based clays typically include Cretaceous clay (originally deposited 65 to 136 million years ago) that was eroded and redeposited 37 to 53 million years ago. These finely disseminated kaolin crudes can be with varying colors from grey, cream, white, brown, red, or pink, depending on the age of kaolin formation and type and level of impurities. In some embodiments, the tertiary, fine crude kaolin clay can include a clay mined from middle Georgia, east Georgia, or a combination thereof.

The tertiary, fine crude kaolin clay can include 15% or less by weight of the tertiary, fine crude kaolin clay, of non-kaolin particles. For example, the tertiary, fine crude kaolin clay can include 12% or less, 10% or less, 9% or less, 8% or less, 7% or less, 6% or less, or 5% or less by weight of the tertiary, fine crude kaolin clay, of non-kaolin particles. The tertiary, fine crude kaolin clay can include 3% or greater by weight of the tertiary, fine crude kaolin clay, of non-kaolin particles. For example, the tertiary, fine crude kaolin clay can include 4% or greater, 5% or greater, 6% or greater, 7% or greater, 8% or greater, 9% or greater, 10% or greater, 12% or greater, or 15% or greater by weight of the tertiary, fine crude kaolin clay, of non-kaolin particles. The tertiary, fine crude kaolin clay can include from 1 to 15% by weight of the tertiary, fine crude kaolin clay, of non-kaolin particles.

The tertiary, fine crude kaolin clay can have an alkali content of 0.1% by weight or greater, based on the total weight of the tertiary, fine crude kaolin clay. For example, the tertiary, fine crude kaolin clay can have an alkali content of 0.2% by weight or greater, 0.3% by weight or greater, 0.4% by weight or greater, 0.5% by weight or greater, 0.7% by weight or greater, 1% by weight or greater, or 1.5% by weight or greater, based on the total weight of the tertiary, fine crude kaolin clay. The tertiary, fine crude kaolin clay can have an alkali content of 2% by weight or less, based on the total weight of the tertiary, fine crude kaolin clay. For example, the tertiary, fine crude kaolin clay can have an alkali content of 1.5% by weight or less, 1% by weight or less, such as 0.7% by weight or less, 0.5% by weight or less, 0.4% by weight or less, or 0.3% by weight or less, based on the total weight of the tertiary, fine crude kaolin clay. In some embodiments, the tertiary, fine crude kaolin clay can have an alkali content of from 0.1% to 2 by weight, based on the total weight of the tertiary, fine crude kaolin clay.

In some embodiments, the tertiary, fine crude kaolin clay can have a K₂O content of 1% by weight or less, such as 0.5% by weight or less, 0.25% by weight or less, 0.15% by weight or less, or 0.10% by weight or less, based on the total weight of the tertiary, fine crude kaolin clay. In some embodiments, the tertiary, fine crude kaolin clay can have a Na₂O content of 1% by weight or less, such as 0.5% by weight or less, 0.2% by weight or less, or 0.15% by weight or less, based on the total weight of the tertiary, fine crude kaolin clay. In some embodiments, the tertiary, fine crude kaolin clay can have a Fe₂O₃ content of 1.5% by weight or less, such as 0.8% by weight or less, based on the total weight of the tertiary, fine crude kaolin clay. In some embodiments, the tertiary, fine crude kaolin clay can have a TiO₂ content of 3.5% by weight or less, such as 1.7% by weight or less, based on the total weight of the tertiary, fine crude kaolin clay.

As described herein, a fine, hydrous kaolin clay can be derived from the tertiary, fine crude kaolin clay. For example, the fine, hydrous kaolin clay derived from the tertiary, fine crude kaolin clay can include 5% or less, 4% or less, 3% or less, 2% or less, or 1% or less by weight of non-kaolin particles, based on the total weight of the fine, hydrous kaolin clay. In some embodiments, the fine, hydrous kaolin clay can include 0.5% or greater, 1% or greater, 1.5% or greater, 2% or greater, 2.5% or greater, 3% or greater, 3.5% or greater, 4% or greater, 4.5% or greater, or 5% or greater by weight of non-kaolin particles, based on the total weight of the fine, hydrous kaolin clay. In some embodiments, the fine, hydrous kaolin clay can include from 0.5% to 5%, from 0.5% to 4%, from 0.5% to 3%, from 0.5% to 2%, or from 1% to 5% by weight of non-kaolin particles, based on the total weight of the fine, hydrous kaolin clay.

The tertiary, fine crude kaolin clay can be subjected to selective flocculation thereby reducing the alkali content from a first alkali content to a second alkali content. For example, the second alkali content can be 10% or less, 20% or less, 30% or less, 40% or less, 50% or less, 60% or less, 65% or less, 70% or less, or 75% or less, by weight, of the first alkali content. In some embodiments, the alkali content in the fine, hydrous kaolin clay (second alkali content) can be 40% or less compared to current refined, hydrous kaolin clay. For example, the fine, hydrous kaolin clay can have an alkali content of 1% by weight or less, based on the total weight of the fine, hydrous kaolin clay. In some embodiments, the fine, hydrous kaolin clay can have an alkali content of 0.7% by weight or less, 0.6% by weight or less, 0.5% by weight or less, 0.3% by weight or less, 0.2% by weight or less, 0.15% by weight or less, or 0.1% by weight or less, based on the total weight of the fine, hydrous kaolin clay. The fine, hydrous kaolin clay can have an alkali content of 0.1% by weight or greater, based on the total weight of the fine, hydrous kaolin clay. In some embodiments, the fine, hydrous kaolin clay can have an alkali content of 0.15% by weight or greater, 0.2% by weight or greater, 0.4% by weight or greater, or 0.5% by weight or greater, based on the total weight of the fine, hydrous kaolin clay. In some embodiments, the fine, hydrous kaolin clay can have an alkali content of from 0.05% to 0.15% by weight, based on the total weight of the fine, hydrous kaolin clay.

The fine, hydrous kaolin clay can have a combined content of Na₂O, K₂O, MgO, and CaO of 1% by weight or less, based on the total weight of the fine, hydrous kaolin clay. For example, the fine, hydrous kaolin clay can have a combined content of Na₂O, K₂O, MgO, and CaO of 0.7% by weight or less, 0.5% by weight or less, 0.4% by weight or less, 0.3% by weight or less, 0.25% by weight or less, 0.2% by weight or less, or 0.15% by weight or less, based on the total weight of the fine, hydrous kaolin clay component. In some embodiments, the fine, hydrous kaolin clay can have a combined content of Na₂O, K₂O, MgO, and CaO of 0.1% by weight or greater, such 0.2% by weight or greater, 0.3% by weight or greater, 0.4% by weight or greater, 0.5% by weight or greater, 0.7% by weight or greater, or 1% by weight or greater, based on the total weight of the fine, hydrous kaolin clay component. The fine, hydrous kaolin clay can have a combined content of Na₂O, K₂O, MgO, and CaO of from 0.10% to 0.25% by weight, based on the total weight of the fine, hydrous kaolin clay.

In some embodiments, the fine, hydrous kaolin clay can have a K₂O content of 0.5% by weight or less, such as 0.25% by weight or less, 0.20% by weight or less, 0.15% by weight or less, 0.10% by weight or less, or 0.05% by weight or less, based on the total weight of the fine, hydrous kaolin clay. In some embodiments, the fine, hydrous kaolin clay can have a Na₂O content of 0.3% by weight or less, such as 0.25% by weight or less, 0.20% by weight or less, 0.15% by weight or less, 0.10% by weight or less, 0.05% by weight or less, or 0.03% by weight or less, based on the total weight of the fine, hydrous kaolin clay. In some embodiments, the fine, hydrous kaolin clay can have a Fe₂O₃ content of 1% by weight or less, such as 0.7% by weight or less, or 0.5% by weight or less, based on the total weight of the fine, hydrous kaolin clay. In some embodiments, the fine kaolin crude can have a TiO₂ content 2% by weight or less, such as 1.5% by weight or less, 1% by weight or less, or 0.5% by weight or less, based on the total weight of the fine, hydrous kaolin clay.

The fine, hydrous kaolin clay component can have a multimodal particle size distribution. The fine, hydrous kaolin clay can include particles, wherein at least about 97% by weight have a particle size diameter of about 2 microns or less, at least about 90% by weight of the particles have a diameter of 1 micron or less, at least about 89% by weight of the particles have a diameter of 0.5 microns or less, and/or at least about 67% of the particles have a diameter of 0.3 microns or less. In some embodiments, the fine, hydrous kaolin clay can include particles, wherein at least about 99% by weight have a particle size diameter of about 2 microns or less, at least about 95% by weight of the particles have a diameter of 1 micron or less, at least about 85% by weight of the particles have a diameter of 0.5 microns or less, and/or at least about 70% of the particles have a diameter of 0.3 microns or less. In some embodiments, the fine, hydrous kaolin clay can include particles, wherein at least about 90% by weight of the particles have a diameter of 1 micron or less. The surface area of the fine, hydrous kaolin clay can be 18 m²/g or greater, such as 20 m²/g or greater, 22 m²/g or greater, or 24 m²/g or greater.

The crystallite size of the fine, hydrous kaolin clay can be 200 Å or greater, such as 250 Å or greater, 300 Å or greater, 350 Å or greater, or 400 Å or greater. In some embodiments, the crystallite size of the fine, hydrous kaolin clay can be 450 Å or less, 400 Å or less, or 350 Å or less. In some embodiments, the crystallite size of the fine, hydrous kaolin clay particles can be from 200 Å to 450 Å, from 250 Å to 450 Å, from 300 Å to 450 Å, from 300 Å to 425 Å, or from 325 Å to 450 Å.

### Blend and Hydrous Kaolin Clay Product

As described herein, the hydrous kaolin clay product can include the fine, hydrous kaolin clay only; or a blend of the fine, hydrous kaolin clay. The blend can include particles wherein at least 80% by weight have a diameter of 2 microns or less. For example, the blend can include particles wherein at least 90%, at least 93%, at least 96%, or at least 98% by weight have a diameter of 2 microns or less. In some embodiments, the blend can include particles wherein from 80% to 98%, from 90% to 98%, or from 93% to 94% by weight have a diameter of 2 microns or less. The impurity profile of the blended kaolin clay can include 0.1% by weight or less Na₂O, 0.25% by weight or less K₂O, 1.5% by weight or less TiO₂, 1% by weight or less Fe₂O₃, 0.1% by weight or less CaO, and 0.1% by weight or less P₂O₅.

Where the hydrous kaolin clay product includes a blend, the weight ratio between the white, coarse kaolin clay and the fine, hydrous kaolin clay can vary. In some embodiments, the weight ratio between the white, coarse kaolin clay and the fine, hydrous kaolin clay can be from 5:95 to 95:5. For example, the weight ratio between the white, coarse kaolin clay and the fine, hydrous kaolin clay is can be 10:90 or greater, 10:80 or greater, 10:70 or greater, 10:60 or greater, 10:50 or greater, 10:40 or greater, 10:30 or greater, 10:20 or greater, 10:10 or greater, 20:10 or greater, 30:10 or greater, 40:10 or greater, 50:10 or greater, 60:10 or greater, 70:10 or greater, 80:10 or greater, of 90:10 or greater. In some embodiments, the weight ratio between the white, coarse kaolin clay and the fine, hydrous kaolin clay can be 90:10 or less, 80:10 or less, 70:10 or less, 60:10 or less, 50:10 or less, 40:10 or less, 30:10 or less, 20:10 or less, 1:1 or less, 10:20 or less, 10:30 or less, 10:40 or less, 10:50 or less, 10:60 or less, 10:70 or less, 10:80 or less, or 10:90 or less. In some embodiments, the weight ratio between the white, coarse kaolin clay and the fine, hydrous kaolin clay can be from 50:50 to 90:10, from 60:40 to 70:30 or from 70:30 to 80:20. In certain cases, the ratio between the white, coarse kaolin clay and the fine, hydrous kaolin clay can be in amount to obtain a blend wherein at least 93% of the particles by weight have a diameter of 2 microns or less.

The precise selection of the weight ratio of the coarse kaolin component to the fine kaolin component will depend on the composition sought in the final product (i.e., the precise ratio of the kaolin blend will depend on the other raw materials and the precise amounts which comprise the batch used in making the cordierite), and the desired properties of the final product (e.g., improved coefficient of thermal expansion, improved dimensional accuracy, reduced tendency toward cracking, overall porosity, and pore size). For example, the fine kaolin clay can serve the function of moderating platelet orientation during extrusion of the cordierite-forming blend. However, if a non-delaminated coarse component is used, then the ratio of the fine component relative to the coarse component can be reduced to compensate for using a non-delaminated (less platy) coarse component. A person skilled in the art would know, without undue experimentation, the ratio of the coarse to fine kaolin components needed depending on the other raw materials used in making the cordierite.

The average crystallite size of the blended kaolin clay particles can be 300 Å or greater, 350 Å or greater, 400 Å or greater, 450 Å or greater, 500 Å or greater, or 550 Å or greater. In some embodiments, the average crystallite size of the blended kaolin clay particles can be 600 Å or less, 550 Å or less, 500 Å or less, 450 Å or less, 400 Å or less, or 350 Å or less. In some cases, the average crystallite size of the blended kaolin clay particles can be from 300 Å to 600 Å, from 400 Å to 600 Å or from 500 Å to 600 Å.

The hydrous kaolin clay product (including the those derived from a coarse kaolin only, a fine kaolin only, or a blend of coarse and fine kaolin) can have an alkali content of 0.2% by weight or less, based on the total weight of the hydrous kaolin clay product. In some embodiments, the hydrous kaolin clay product can have an alkali content of 0.18% by weight or less, 0.15% by weight or less, 0.13% by weight or less, 0.10% by weight or less, 0.08% by weight or less, or 0.05% by weight or less, based on the total weight of the hydrous kaolin clay product. In some embodiments, the hydrous kaolin clay product can have an alkali content of from 0.05% to 0.2% by weight, based on the total weight of the hydrous kaolin clay product.

The hydrous kaolin clay product can have a combined content of Na₂O, K₂O, MgO, and CaO of 1% by weight or less, based on the total weight of the hydrous kaolin clay product. For example, the hydrous kaolin clay product can have a combined content of Na₂O, K₂O, MgO, and CaO of 0.7% by weight or less, 0.5% by weight or less, 0.4% by weight, 0.3% by weight or 0.2% by weight or less, based on the total weight of the hydrous kaolin clay product. In some embodiments, the hydrous kaolin clay product can have a K₂O content of 0.3% by weight or less, such as 0.25% by weight or less, 0.20% by weight or less, 0.15% by weight or less, or 0.10% by weight or less, based on the total weight of the hydrous kaolin clay product. In some embodiments, the hydrous kaolin clay product can have a Na₂O content of 0.3% by weight or less, such as 0.25% by weight or less, 0.20% by weight or less, 0.15% by weight or less, 0.10% by weight or less, 0.05% by weight or less, 0.03% by weight or less, 0.02% by weight or less, or 0.01% by weight or less, based on the total weight of the hydrous kaolin clay product. In some embodiments, the hydrous kaolin clay product can have a Fe₂O₃ content of 1% by weight or less, such as 0.7% by weight or less or 0.5% by weight or less, based on the total weight of the hydrous kaolin clay product. In some embodiments, the hydrous kaolin clay product can have a TiO₂ content 2% by weight or less, such as 1.5% by weight or less, 1% by weight or less, or 0.5% by weight or less, based on the total weight of the hydrous kaolin clay product.

The hydrous kaolin clay product can be free of or include trace levels of organics.

The hydrous kaolin clay product can include particles, wherein at least 99% by weight have a diameter of 2 microns or less, at least 96% by weight of the particles have a diameter of 1 micron or less, at least 89% by weight of the particles have a diameter of 0.5 microns or less, and/or at least 70% of the particles have a diameter of 0.3 microns or less. In some embodiments, the hydrous kaolin clay product can have a coarser particle size. For example, when the hydrous kaolin clay product is produced from a coarse kaolin clay only, the hydrous kaolin clay product can comprise particles wherein at least 98% of the particles by weight have a diameter of less than 5 microns; at least 84% of the particles by weight have a diameter of less than 2 microns; at least 41% of the particles by weight have a diameter of less than 0.5 micron; and at least 23% of the particles by weight have a diameter of less than 0.3 micron.

In some embodiments, the surface area of the hydrous kaolin clay can be at least 15 m²/g, at least 16 m²/g, at least 17 m²/g, at least 18 m²/g, at least 20 m²/g, at least 22 m²/g, or at least 24 m²/g.

The +325 mesh residue content of the hydrous kaolin clay product can be 50 ppm or less, 45 ppm or less, 40 ppm or less, 38 ppm or less, or 35 ppm or less.

The crystallite size of the hydrous kaolin clay the hydrous kaolin clay product can be 200 Å or greater, such as 250 Å or greater, 300 Å or greater, or 350 Å or greater. In some embodiments, the crystallite size of the hydrous kaolin clay the hydrous kaolin clay product can be 400 Å or less, 350 Å or less, 300 Å or less, or 250 Å or less. In some embodiments, the crystallite size of the hydrous kaolin clay the hydrous kaolin clay product can be from 200 Å to 400 Å, from 200 Å to 375 Å, or from 200 Å to 350 Å.

### Methods of Making

Methods of making a hydrous kaolin clay product are disclosed herein. The methods disclosed enable the efficient production of the hydrous kaolin clay. The hydrous kaolin clay can be prepared from a fine, hydrous kaolin clay only; or a blend of fine, hydrous kaolin clay as described herein. When a blend is used, the blending of the coarse and fine kaolin components can take place at any point during the mining and processing of the kaolin clay. For example, the coarse and fine kaolin components can be blended prior to spray drying or after spray drying. The coarse and fine kaolin components can also be added to a cordierite raw materials batch as individual components as long as the net result is the addition of two kaolin components that would form a blend with the properties outlined in this document. Prior to blending the kaolin samples, the method can include refining a white, coarse crude kaolin clay to form the white, coarse kaolin clay and/or refining a tertiary, fine crude kaolin clay having a first alkali content, to form the fine, hydrous kaolin clay.

Refining the kaolin crudes (coarse kaolin crude and/or fine kaolin crude) can include one or more of blunging, degritting, floatation, ozonation, centrifugation, selective flocculation, magnetic separation, and refinement in any suitable manner to provide the hydrous kaolin clay.

In some embodiments, a slurry of the kaolin crude can be formed by combining the kaolin crude with water, and optionally a dispersant. The dispersant can be added to the slurry to provide additional fluidity to facilitate the subsequent (including degritting) processes. The dispersant can be an organic dispersant or inorganic dispersant. Suitable inorganic dispersants include phosphate and silicate salts. Examples of phosphate salts include inorganic polyphosphates and pyrophosphates (which are actually a type of polyphosphate), sodium hexametaphosphate (SHMP), sodium tripolyphosphate (STPP), tetrasodium pyrophosphate (TSPP), and sodium silicate. Suitable organic dispersants can include ammonia-based dispersants, sulfonate dispersants, carboxylic acid dispersants, and polymeric dispersants (such as polyacrylate dispersants), as well as other organic dispersants conventionally employed in kaolin pigment processing. Examples of organic dispersants can include sodium polyacrylate, ammonium polyacrylate, and mixtures thereof. In some examples, the dispersant can include a combination of sodium silicate and sodium polyacrylate dispersants. The amount of dispersant used in the slurry can be from 0.01% to 1% based on the weight of kaolin crude. The kaolin crude can be blunged at a solids level of 50% or greater, such as 55% or greater, or 60% or greater using a lab Waring blended equipped with 4L cell. During the blunging step, the pH of the kaolin slurry can be adjusted to from 8.5 to 10.5, such as from 8.5 to 9.5 or from 10.0 to 10.5. The pH can be adjusted using one or more of soda ash, caustic, or ammonia.

The method for refining the kaolin crude can include degritting the slurry. Degritting can be performed in any conventional manner using one or more of sieves, sandboxes, gravity settling, or hydrocyclones. Either wet or dry degritting may be employed. In some embodiments, degritting can be carried out by combining the kaolin crude with water and passing the slurried mixture through a sieve, such as a 325 mesh sieve or a 200 mesh sieve. The resulting degritted kaolin crude may be composed largely of kaolin particles that usually have a wide range of sizes ranging from slimes (finer than 0.3 microns) up to about 15 microns.

After degritting, the resulting degritted kaolin can be subjected to flotation, selective flocculation, and/or magnetic separation. Flotation, selective flocculation, and/or magnetic separation serve to reduce the titania content of the kaolin crude to less than 1.5% by weight and/or reduce the iron oxide content to less than 1.5% by weight. In some embodiments, selective flocculation can reduce the titania content to 0.7% by weight or less, 0.5% by weight or less, or 0.4% by weight or less, and/or reduce the iron oxide content to 1.25% by weight or less, 1 % by weight or less, or 0.75% by weight or less. Selective flocculation can reduce the alkali content of the kaolin clay as described above. In some embodiments, selective flocculation can reduce the alkali content to 0.2% by weight or less, 0.15% by weight or less, or 0.1% by weight or less of the kaolin clay. Magnetic separation can reduce the iron oxide of the kaolin clay. In some embodiments, magnetic separation can reduce the iron oxide content of the kaolin clay to less than 0.75% by weight.

Selective flocculation can be carried out in any conventional manner. In selective flocculation, charged inorganic or organic molecules are used to selectively flocculate minerals from each other based on difference in mineral species. In some embodiments, the flocculation polymer can include a high molecular weight anionic polymer having a molecular weight greater than 100,000 Da. The high molecular weight anionic polymer can be selected from an anionic polyacrylamide, an acrylate acrylamide copolymer, an acrylic acrylamide copolymer, and combinations thereof. The selective flocculation process is such that exclusively gray crudes, or crude blends of various colored kaolin clays can be processed to obtain premium brightness kaolin products.

The method can further include conditioning the kaolin suspension prior to adding the flocculation polymer thereto. The conditioning step can include the addition of various conditioning chemicals to facilitate polymer absorption (a high molecular weight, anionic polymer) onto the impurities (such as titania or ferrous containing impurities) in the kaolin clay during the selective flocculation step. The kaolin suspension can be conditioned at from 40% to 50% solids. Other suitable conditioning steps can include allowing the kaolin suspension to age for a period of at least thirty minutes, adjusting the pH of the kaolin suspension prior to allowing the suspension to age, adding sodium salt to the kaolin suspension after providing the dispersed aqueous suspension, or mechanically agitating the kaolin suspension during the aging.

In some embodiments, the kaolin suspension can be conditioned by adding a small amount of low molecular weight sodium polyacrylate dispersant in combination with other conditioning chemicals (such as oleic acid and calcium chloride) to the kaolin suspension. The amount of conditioning chemicals and sodium polyacrylate dispersant can improve the kaolin recoveries during the selective flocculation process. In particular, kaolin recoveries as high as 70% or even 75% by weight can be recovered from selective flocculation, while maintaining above 90 GEB final bleached product brightness of fine clay stream, when suitable amounts of conditioning chemicals and sodium polyacrylate dispersant.

Flotation can be performed in any conventional manner including wet flotation, ultraflotation, froth flotation, or TREP flotation (titania removal and extraction process). General methods of flotation are described in Mathur, S., "Kaolin Flotation", Journal of Colloid and Interface Science, 256, pp. 153-158, 2002. 2002.

The kaolin can be centrifuged prior to flotation, selective flocculation, and/or magnetic separation to control the particle size distribution such that subsequent centrifuge operation results in the desired particle size distribution. Although not wishing to be bound by any theory, it is believed that the usage of centrifuge can also results in removal of some impurities, such as coloring impurities and thus increasing brightness of the clay. Centrifugation can be conducted in a single step or multiple steps. In some embodiments, the method can include a high-speed centrifugation treatment in which the centrifuge can operate at "g" forces from above 1,000 to 10,000. For example, the high-speed centrifugation treatment can operate at "g" forces from 2,000 to 7,500 or from 2,500 to 5,000. Examples of centrifuges that can be used in the methods described herein can include Bird solid bowl machines, high speed centrifuges, horizontal three-phase centrifuges, and the like.

The kaolin undergoing processing can be optionally subjected to ozonation or treated with hydrogen peroxide or sodium hypochlorite. Ozonation involves, using ozone, to bleach components, such as organic discolorants, that may be present. The ozone acts not only to remove substantial portions of discoloring organics, but also destroys or breaks down by oxidation molecules of organic additives such as dispersants or polymers, if such a compound is present. However, the ozone does not have any significant impact on inorganic dispersants. Ozone, hydrogen peroxide or sodium hypochlorite can be utilized for removing any organic impurities associated with the crude kaolin or introduced during clay processing steps.

Ozone can be effective when processing crudes comprising high levels of gray particles. For example, ozone can be used to process gray crudes up to 80% by weight or greater (e.g., 90% by weight or greater, or up to 100% by weight gray crudes) to further remove impurities and enhance the physical properties (such as brightness) of the final kaolin product. Ozone can be applied immediately after degritting or after the physical beneficiation steps such as selective flocculation or magnetic separation.

Ozonation can be carried out at a suitable dosage level, such as from 0.1 to 20 pounds of ozone per ton of kaolin. In some embodiments, ozonation can be carried out at a dosage level from 0.5 to 10 pounds of ozone per ton of kaolin. The ozone can be applied as a stream of bubbles which can be passed upwardly through the slurry. This can be a batch process or a continuous process in which the ozone bubbles pass counter current to a flow of the slurry in a pipe or other conduit, such as mixed and packed column.

The kaolin obtained from the one or more of degritting, floatation, ozonation, centrifugation, selective flocculation, and magnetic separation can be further refined. For example, the kaolin can be further refined using a method including at least one of flocculation, bleaching, filtering, re-dispersing, drying, blending, and pulverizing to provide the hydrous kaolin product. Flocculation involves separating minerals of one species from minerals of the same species, e.g., the separation of ultrafine kaolin particles from fine or coarse kaolin particles. Flocculation can be effected using an ionic material, such as an acid. In some embodiments, sulfuric acid in combination with alum can be used for flocculation.

The methods described herein can include bleaching the kaolin particles. Generally, bleaching includes increasing the brightness of the kaolin. Bleaching can include contacting the kaolin with a suitable amount of one or more of hydrosulfite (dithionite) salts, potassium permanganate, oxygen gas, alkali bichromates, alkali chlorates, alkali chlorites, ammonium persulfate, soluble peroxides such as sodium and hydrogen peroxide, or sodium hypochlorite. In some embodiments, the methods described herein do not include bleaching.

Filtration can be employed to increase the solids content of the kaolin sample (e.g. up to 55% or higher) and/or to substantially remove particles larger than 2 microns. Increasing the solids content in some instances can improve the efficiency of a subsequent spray drying operation. Filtration can be carried out using rotary drum vacuum filters.

The filter cake obtained from filtration can be re-dispersed with a suitable dispersant at about pH 7.0. in some embodiments, the dispersant can include any one of the dispersants described herein, such as sodium polyacrylate, ammonium polyacrylate, sodium hexametaphosphate, sodium tripolyphosphate, sodium tetrapyrophosphate, soda ash, caustic, ammonia, or mixtures thereof.

Drying, such as spray drying, the kaolin can be performed to reduce the moisture level of the kaolin. Drying the kaolin may facilitate subsequent pulverization of the kaolin. The kaolin can be dried by spray drying, flash drying, rotary drying, or a combination thereof. In some embodiments, after drying the kaolin can have a moisture level of less than 1.5% by weight, less than 1% by weight, or less than 0.5% by weight.

The methods described herein can include pulverizing the kaolin. In some embodiments, the kaolin can be pulverized at least once. The pulverization may break up any agglomerates that may be present. Such agglomerates may form during drying, changing the particle size achieved by centrifugation and other process acts.

In some embodiments, the method of forming a hydrous kaolin clay product can include refining a tertiary, fine crude kaolin clay having a first alkali content, to form an ultra-fine, hydrous kaolin clay. Refining the tertiary, fine crude kaolin clay can include one or more of degritting, floatation, selective flocculation, and/or ozonation of the tertiary, fine crude kaolin clay to form the fine, hydrous kaolin clay. The fine, hydrous kaolin clay can have an alkali content that is less than the alkali content of the tertiary, fine crude kaolin clay.

Centrifugation can be used to provide an ultrafine hydrous kaolin stream. In some cases, providing the ultrafine hydrous kaolin stream can include centrifuging the the refined, fine, hydrous kaolin clay, the blend, or a combination thereof. For example, the method can include centrifuging the refined, white, coarse kaolin clay to provide the ultrafine hydrous kaolin stream. In another example, the method can include centrifuging the refined, fine, hydrous kaolin clay to provide the ultrafine hydrous kaolin stream. The ultrafine hydrous kaolin stream can comprise particles wherein at least 70% by weight have a diameter of 0.3 micron or less, and an average crystallite size of 400 Å or less, such as 380 Å or less, 350 Å or less or 250 Å or less.

In some embodiments, the method of preparing the hydrous kaolin clay product can include refining the ultrafine hydrous kaolin stream into an ultrafine hydrous kaolin clay. Refining the ultrafine hydrous kaolin stream can include one or more of flocculation, bleaching, filtering, re-dispersing, spray drying, pulverizing, or combinations thereof.

Prior to refining the ultrafine hydrous kaolin stream, the methods described herein can include blending the ultrafine hydrous kaolin stream with a delaminated, coarse kaolin clay.

In some embodiments, the method does not include the step of blending the refined, white, coarse kaolin clay and the refined, fine, hydrous kaolin clay. For example, the hydrous kaolin clay product can be derived from a coarse hydrous kaolin stream only; a fine hydrous kaolin stream only; or in combination with a delaminated, coarse kaolin clay.

The kaolin clay product that is developed herein helps adjusting the thermal expansion and shrinkage properties of cordierite body formed for the ceramic honeycombs.

Cordierite ceramic and methods of making the cordierite ceramic are also disclosed. The method can include preparing a precursor cordierite batch composition comprising an ultrafine hydrous kaolin clay as described herein. The precursor cordierite batch composition can further be mixed with a material such as talc, alumina, aluminum hydroxide, silica, a binder, a lubricant, or a combination thereof. The method can include extruding the precursor cordierite batch composition into a green body. The method can further include sintering the green body to obtain the cordierite ceramic.

In some embodiments, the precursor cordierite batch composition includes from 10% to 30% by weight or from 15% to 25% by weight of the ultrafine hydrous kaolin clay.

In some embodiments, the cordierite ceramic can exhibit a coefficient of thermal expansion (25°C to 800°C) of 1.25 x 10⁻⁶/°C or less or 1.20 x 10⁻⁶/°C or less. For example, the cordierite ceramic in a honeycomb structure can have a coefficient of thermal expansion (25°C to 800°C) of 1.25 x 10⁻⁷/°C or less or 1.20 x 10⁻⁷/°C or less.

### Method of Use

The hydrous kaolin disclosed herein can also be used in any application wherein kaolin can be used. For example, the hydrous kaolin clay product can be advantageously employed in cordierite compositions. The hydrous kaolin clay product described herein can be used as a raw material component in the sintering of cordierite ceramic honeycombs with enhanced thermal properties. As described herein, the hydrous kaolin clay product can comprise a white, coarse hydrous kaolin clay and a fine hydrous kaolin clay. The combination of these two materials is expected to enhance the thermomechanical properties of cordierite honeycombs by creating a mechanism to manipulate the degree of cordierite crystal orientation in the final product.

Without wishing to be bound by theory, the use of fine clay in combination with a larger delaminated clay would have several advantages. The fine clay could be used to moderate orientation of the delaminated kaolin and talc during extrusion resulting in a cordierite crystal structure that is oriented to maintain a low coefficient of thermal expansion while minimizing the degree of anisotropic thermal expansion in the axial and transverse directions of the ceramic honeycomb. This would reduce the degree of microcracking associated with temperature variations typically observed during normal catalytic converter or filtering operations. The fine particle size clay also enables improved particle packing within the green body. The finer hydrous clay would fill voids between other larger raw material crystals that calcined clay could not. The improved particle packing within the green body would increase the green strength eliminating product deformation prior to drying and firing of the substrate.

It is desirable to have a more homogenous distribution of cordierite precursors within the green body which would potentially be enabled by the addition of a fine hydrous kaolin component. Increased homogeneity would enable improved conversion of the precursors into cordierite and limit the formation of impurity phases within the crystal structure that would increase the coefficient of thermal expansion of the overall ceramic. The increased surface area and reduced crystallinity associated with a finer, hydrous clay would also have a lower reaction temperature that would enable reduced temperature or firing time of the substrate without impacting the overall conversion to cordierite. This would reduce the energy costs associated with product manufacture.

Substrates comprising the cordierite ceramic described herein are also disclosed. The substrate can include an automotive catalytic substrate or a diesel particulate filter.

The hydrous kaolin clay product can also be used in other compositions such as in coatings. The coating compositions can be used for several applications, including industrial coatings (e.g., automotive coatings and architectural coatings), inks, films, adhesives, and paints. In some embodiments, the coatings can be used in paint compositions, such as a high gloss, semi-gloss, or flat paint.

In some embodiments, the hydrous kaolin clay product can be used in adhesives. The hydrous kaolin clay product can also be used in plastics, papers such as thermal paper, or as a filler. It should be noted that the methods of preparing the kaolin clay products disclosed herein may not include all the processing steps described herein. For example, kaolin clay products can be prepared from coarse fractions generated from the centrifugation step. In particular, the coarse fractions generated from the centrifugation step can be further processed via additional processing such as using magnetic separation followed by delamination to obtain a wide range of high aspect ratio products that are used as the filler/extender in tire or rubber applications, and such the like.

By way of non-limiting illustration, examples of certain embodiments of the present disclosure are given below.

### Examples

The following examples are put forth so as to provide those of ordinary skill in the art with a complete disclosure and description of how the compositions and/or methods claimed herein are made and evaluated, and are intended to be purely exemplary and are not intended to limit the scope of the disclosure. Unless indicated otherwise, parts are parts by weight, temperature is in °C or is at ambient temperature, and pressure is at or near atmospheric.

### Example 1: Preparation of a fine particle size kaolin stream

Example 1 outlines a process for preparing coarse and fine crudes to obtain an ultrafine particle size kaolin stream. The coarse kaolin clays can include a white clay found in middle Georgia deposits. The fine clays can include tertiary kaolin mined from middle Georgia or a tertiary kaolin mined from the east Georgia area. The finely disseminated kaolin crudes can be of varying colors from grey, cream, white, brown, red, pink color depending the age of kaolin formation and type and level of impurities.

In this example, coarse white crudes from middle Georgia were blunged at 60% solids using a lab Waring blended equipped with 4L cell. A combination of sodium silicate and sodium polyacrylate dispersants were included in the coarse white crude sample. During blunging, the pH of the clay slurry was adjusted with soda ash to a target level of 9.0. The clay slip was then degritted using 200 mesh screen at 40% solids followed by centrifugation to obtain a target particle size in which 76% by weight of the particles exhibited a diameter of <2 microns, as measured by Sedigraph Model 5100 (manufactured by Micromeritics). The centrifuged clay (fines fraction) was then subjected to magnetic separation in two steps to remove titania-ferrous impurities.

A mixture of grey, cream, brown, red and pink color fine clays from the middle Georgia mines were blunged at 60% solids using a lab Waring blended equipped with 4L cell. In this example, the amount of gray crude was kept at 40%. A combination of sodium silicate and sodium polyacrylate dispersants were used in the fine clay crude. During blunging, the pH of the clay slurry was adjusted with soda ash to a target level of 10.0. The clay slip was then degritted using 200 mesh screen at 45% solids followed by selective flocculation to obtain a beneficiated fine kaolin stream for blending with the above mentioned coarse stream obtained from the two-stage magnetic separation process. Prior to selective flocculation step, the clay slip was conditioned at 40-50% solids using various conditioning chemicals to facilitate polymer absorption (a high molecular weight, anionic polyacrylamide) onto the titania-ferrous impurities during selective flocculation step. Feed solids to the selective separation vessel were adjusted to 20% to allow settling of flocculated phase with the aid of polymer and to remove efficiently the discolored impurities from kaolin clay. The settling rate was kept at 7.5 minutes per inch. After settling was completed, a beneficiated kaolin clay was obtained from the top, while flocculated discolored impurities were removed from the bottom of the selective flocculation equipment. The kaolin clay was then subjected to ozone to remove any residual polymer and also eliminate any organic components associated with the kaolin clay.

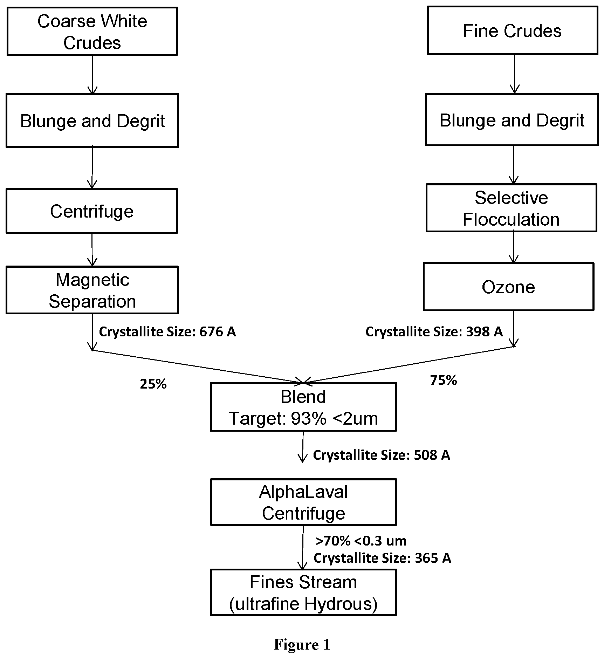

The beneficiated coarse and fine kaolin clay streams were then blended to a target particle size wherein 93% by weight of the particles are <2 microns, as measured by Sedigraph. In this example, a blend of 75% fines and 25% coarse streams provided target particle size for the centrifuge feed. This blend was then subjected to high speed centrifugation (to simulate AlphaLaval disc nozzle centrifuge) to obtain a fine stream kaolin clay wherein a minimum of 70% by weight of the particles are 0.3 micron or less in diameter. The centrifuge clay was then flocked with sulfuric acid and alum, filtered, and re-dispersed with an ammonium polyacrylate dispersant. The flowchart shown in **Figure 1** outlines the process for preparing the kaolin fines stream. Table 1 gives the physical properties of final kaolin fines streams obtained from above mentioned example. XRF results on control and exemplary fines streams are given in Table 2.

A control was prepared using a conventional process. In the conventional process, crude kaolin was dispersed in the presence of sodium silicate/alum and soda ash dispersants to form a dispersion. The dispersion was then hydrocycloned, screened, and size classified by centrifugation. The centrifuged clay was then subjected to flotation to remove titania-ferrous impurities. During the flotation step, various organic and inorganic chemicals are used to promote flotation. The main organic chemicals used in the flotation step is a tall oil fatty acid and hydroxamate. The upgraded kaolin clay obtained from flotation was then subjected to ozone to remove any organic components including organic based chemicals and organic entities in the kaolin itself. The ozoned clay was then centrifuged using AlphaLaval disc stack centrifuge to obtain the desired particle size for the kaolin clay of interest. The centrifuge clay was bleached at acidic pH (∼3) using alum and sulfuric acid. Following the flocking process, vacuum filtration was applied to remove water, soluble salts and iron from the kaolin particles. Filtration also increased the solids up to 60% on the filter cake. The filtered clay was dispersed using ammonium polyacrylate. The dispersant provides fluidity for subsequent spray drying. The clay was then spray dried/pulverized for final use.

**Table 1: Physical properties of final kaolin fines streams.**

| | **Fines Stream (Current- Control)** | **Fines Stream (Example 1)** |
|---|---|---|
| Moisture, % | 0.68 | 0.74 |
| TAPPI pH | 4.5 | 4.8 |
| Surface Area, m²/g | 24.9 | 25.0 |
| Crystallite Size, Angstrom | 388 | 391 |
| Loss-on-ignition, % | 15.4 | 15.3 |
| +325 mesh Residue, % | 0.0011 | 0.0006 |
| +150 mesh Residue, % | 0.0024 | 0.0015 |
| Particle Size, Sedigraph | | |
| <10 µm, % | 100 | 100 |
| <5 µm, % | 100 | 100 |
| <2 µm, % | 100 | 100 |
| <1 µm, % | 100 | 99 |
| <0.5 µm, % | 94 | 92 |
| <0.4 µm, % | 86 | 85 |
| <0.3 µm, % | 71 | 71 |
| <0.2 µm, % | 44 | 44 |
| Median, µm | 0.22 | 0.22 |

**Table 2: XRF results on control and exemplary fines streams.**

| Sample ID | % SiO₂ | % Al₂O₃ | % Na₂O | % K₂O | % TiO₂ | % Fe₂O₃ | % CaO | % MgO | % P₂O₅ | %LOI |
|---|---|---|---|---|---|---|---|---|---|---|
| *XRF results - as received basis* | | | | | | | | | | |
| Control | 45.9 | 39.1 | 0.071 | 0.13 | 0.40 | 0.83 | 0.02 | 0.05 | 0.06 | 15.43 |
| Example 1 | 45.3 | 38.8 | 0.044 | 0.07 | 0.73 | 0.79 | 0.01 | 0.04 | 0.04 | 15.30 |

As shown in the Table 2, both monovalent (Na⁺, K⁺) alkalis, divalent cations (Mg²⁺, Ca²⁺), and phosphorus level are low in the exemplary fines stream as compared to the control fines stream. The cationic alkali species and anionic species can be detrimental on the thermal properties (including the coefficient of thermal expansion and thermal stability) of ceramic honeycombs. As such, lower values of alkali species and anionic species translate into better thermal properties of the ceramic honeycomb body formed.

### Example 2: Preparation of a fine particle size kaolin stream

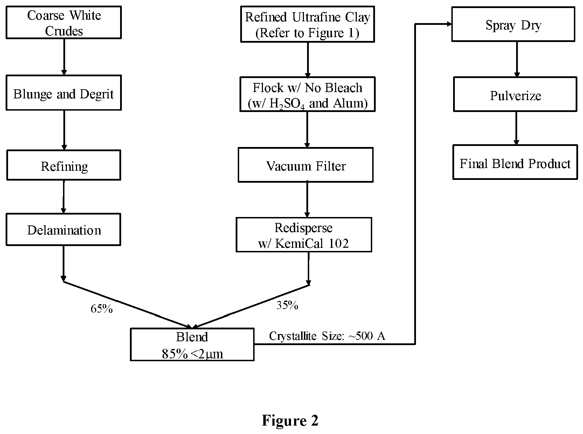

A blend of delaminated and fine particle size kaolin streams were prepared as shown in **Figure 2****.** A control sample was prepared as described in the example above. The coarse delaminated stream was obtained from two different sources of coarse clays in the middle Georgia area. The fine clays consisted of a tertiary kaolin mined from the middle Georgia area. Table 3 gives the physical properties of final kaolin fines streams obtained from example 2. XRF results on control and exemplary fines streams are given in Table 4.

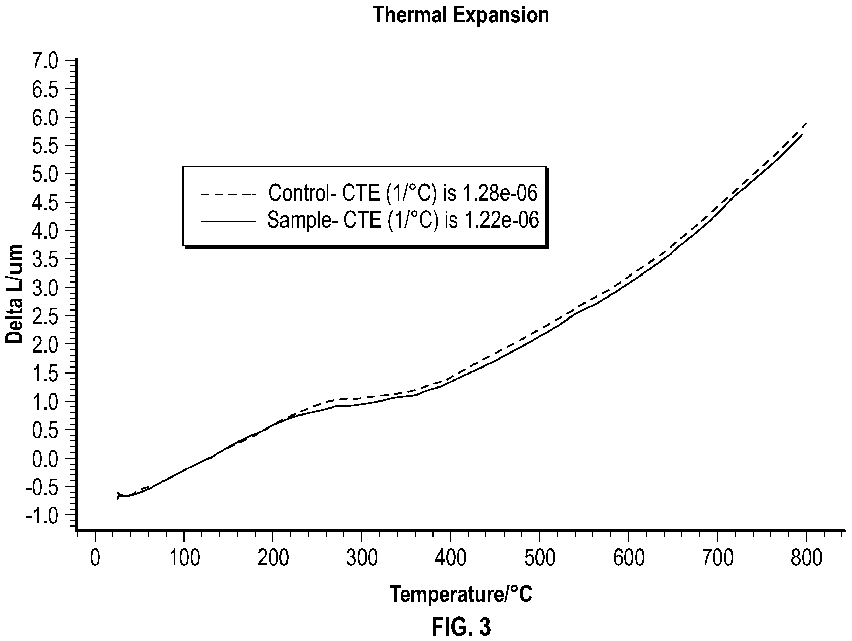

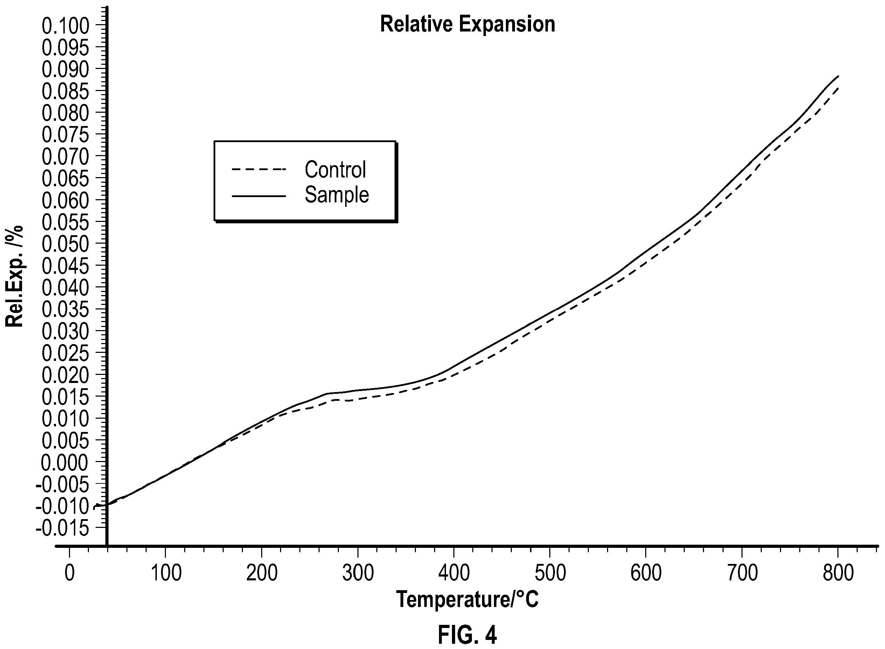

**Figures 3** and **4** is a comparison of the coefficient of thermal expansion of a ceramic disk including the blended kaolin clay and a control. It would be expected that a ceramic honeycomb including the blended kaolin clay would have a coefficient of thermal expansion of ten times less than the coefficient of thermal expansion of a ceramic disk including the same material.

**Table 3: Physical properties of final blend kaolin streams.**

| **Property** | **Control** | **Example 2** |
|---|---|---|
| TAPPI Brightness (%) | 82.3 | 82.0 |
| Residue (%), +325 mesh | 0.0037 | 0.0031 |
| +150 mesh | 00027 | 0.0010 |
| Moisture (%) | 0.83 | 0.46 |
| TAPPI pH | 5.2 | 5.0 |
| LOI (%) | 14.5 | 14.4 |
| TiO₂ (%) | 1.10 | 1.17 |
| Fe₂O₃ (%) | 0.50 | 0.50 |
| Surface area (m²/g) | 18 | 18 |
| PSD | | |
| % < 10 µm | 100 | 100 |
| % < 5 µm | 98 | 97 |
| % < 2 µm | 86 | 85 |
| % < 1 µm | 73 | 72 |
| % < 0.5 µm | 57 | 55 |
| % < 0.3 µm | 38 | 37 |
| % < 0.2 µm | 21 | 21 |
| median, µm | 0.41 | 0.42 |

**Table 4: XRF results on control and exemplary blend streams.**

| Sample ID | % SiO₂ | % Al₂O₃ | % Na₂O | % K₂O | % TiO₂ | % Fe₂O₃ | % CaO | % MgO | % P₂O₅ | Sum |
|---|---|---|---|---|---|---|---|---|---|---|
| *XRF results* - *volatile free basis, pressed pellet* | | | | | | | | | | |
| Control | 52.9 | 45.4 | 0.059 | 0.12 | 1.29 | 0.59 | 0.03 | 0.04 | 0.06 | 100.6 |
| Example 2 | 52.9 | 45.5 | 0.019 | 0.09 | 1.37 | 0.59 | 0.02 | 0.03 | 0.05 | 100.6 |

| *XRF results* - *back calculated to "as-received" basis using %LOI* | | | | | | | | | | *%LOI* |
|---|---|---|---|---|---|---|---|---|---|---|
| Control | 45.2 | 38.8 | 0.050 | 0.10 | 1.10 | 0.50 | 0.02 | 0.03 | 0.05 | 14.54 |
| Example 2 | 45.3 | 38.9 | 0.016 | 0.08 | 1.17 | 0.50 | 0.02 | 0.03 | 0.04 | 14.41 |

### Residual organic analysis in kaolin products

Organic analysis was carried out on the control hydrous kaolin product and inventive fine hydrous kaolin product for ceramic substrates using Mass Spectrometry technique. The two (control and inventive products) samples prepared were analyzed directly on a Phenomenex ZB-5MSi column employing splitless-mode injections of one-microliter volumes. Mass spectroscopy analysis showed that no appreciable differences were noted in the chromatograms of the two samples tested as far as the level of organic are concerned. In fact, the inventive fine kaolin product yielded cleaner of the derivatized extracts, according to the analysis results. Accordingly, the mass spectrometry method confirm that the newly developed method can provide similar fine kaolin product for the ceramic substrates.

### Example 3: Preparation of a coarse kaolin pigment

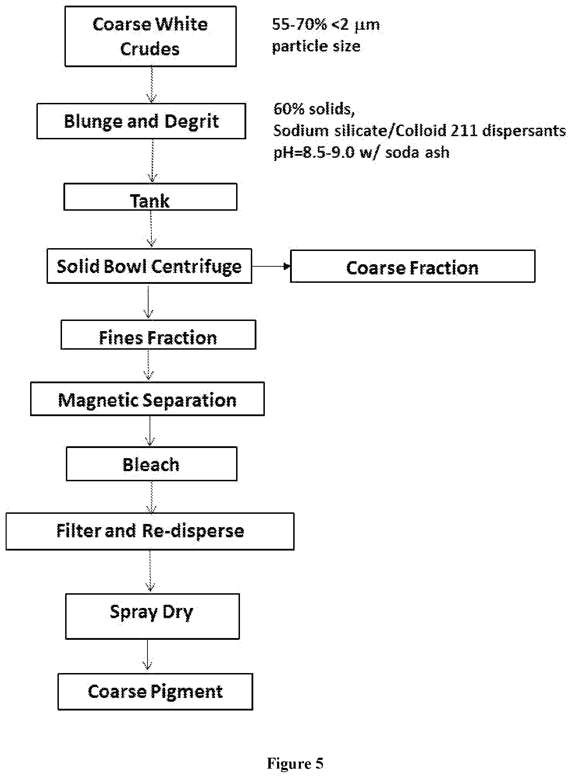

Example 3 outlines a process for preparing a coarse particle size kaolin product from coarse kaolin crudes (which is also depicted in Figure 5). The coarse kaolin crude utilized in this example can typically be white color as found in Middle Georgia kaolin deposits.

In this example, coarse white crudes -obtained from BASF Middle Georgia deposits-were blunged at 60% by weight solids in the presence of sodium silicate and sodium polyacrylate dispersants using a lab Waring blended equipped with 4L cell to produce a clay slurry. During the blunging step, the pH or the clay slurry was adjusted to 8.5 to 9.0 using soda ash to form a clay slip. The clay slip was then degritted using 200 mesh screen at 40% solids followed by centrifugation to obtain a target particle size in the range from 75% to 80% by weight having <2 microns particle size as measured by Sedigraph Model 5100. The centrifuged product (fines fraction) was then subjected to magnetic separation to remove titania-ferrous impurities. It should be noted that the coarse fractions generated from the centrifugation step can be further processed via additional processing such as using magnetic separation followed by delamination to obtain a wide range of high aspect ratio products that are used as the filler/extender in tire/rubber applications etc.

The product obtained from magnetic separation of the fines fraction was then flocked with sulfuric acid and alum followed by filtering. The filter cake was re-dispersed at ∼60% solids with an appropriate dispersant at around pH=∼7.0 to obtain a deflocculated clay slurry. Useful dispersants include sodium polyacrylate, ammonium polyacrylate, sodium hexametaphosphate, sodium tripolyphosphate, tetrasodium pyrophosphate, soda ash, caustic, ammonia and blends thereof. The resulting dispersed kaolin slurry was then spray dried to obtain a coarse kaolin pigment. Such coarse kaolin pigment has many uses from coatings, paints, adhesives, ink and thermal paper among other industrial applications.

Figure 5 is the process flowsheet for producing the coarse kaolin pigment, and Table 5 summarizes the physical properties of inventive coarse kaolin product. As shown in Table 5, a final product with an 89.9 GEB and comprising 84% of particles by weight having <2 microns particle size was obtained. It should be noted that the particle size of the coarse kaolin pigment can be adjusted by adding 5% or more of a fine hydrous kaolin clay processed through selective flocculation and ozone prior to reductive bleaching or spray drying to achieve the target particle size and, also at least 89.5 GEB brightness on coarse kaolin product.

Included in Table 5 are the physical properties of control pigment (a commercial product) as obtained from the BASF manufacturing facilities for comparison. The control pigment is processed by flotation and other processing step.

The coarse kaolin product was formulated as a flat paint having 76% PVC (pigment volume concentration). The paint application test results are summarized in Table 6. As shown in Table 6, the coarse pigment provides similar optical properties in flat paint formulation (contrast ratio, reflectance, whiteness, gloss and tint strength) compared to control coarse pigment.

**Table 5: Physical properties of coarse pigment and control coarse pigment.**

| **Properties** | **Inventive Coarse Pigment** | **Control Coarse Pigment** |
|---|---|---|
| TAPPI Brightness (%) | 89.9 | 90.0 |
| ISO Brightness (%) | 88.2 | 88.5 |
| Hunter | | |
| L | 95.8 | 95.8 |
| A | -0.21 | -0.17 |
| Bb | 2.97 | 2.54 |
| Surface Area (m²/g) | 14.9 | 15.6 |
| Sedigraph Particle Size Distribution | | |
| % <10 µm | 100 | 99 |
| % <5 µm | 98 | 95 |
| % <2 µm | 84 | 83 |
| % <1 µm | 66 | 69 |
| % <0.5 µm | 41 | 50 |
| % <0.3 µm | 23 | 31 |
| % <0.2 µm | 13 | 17 |
| Average Particle Size, µm | 0.63 | 0.58 |
| Residue (%), +325 mesh | 0.0038 | 0.0023 |
| TAPPI pH | 7.2 | 7.1 |

**Table 6: Flat paint application test results at 76% pigment volume concentration (PVC) using coarse pigment.**

| **Properties** | **Inventive Coarse Pigment** | **Control Coarse Pigment** |
|---|---|---|
| Viscosity KU | 94 | 97 |
| pH | 9.0 | 8.9 |
| C. Ratio 3 mils | 95.3 | 95.1 |
| Reflectance | 87.7 | 87.6 |
| Whiteness | 78.9 | 79.0 |
| Yellowness | 3.3 | 3.2 |
| Hunter L | 93.7 | 93.6 |
| Hunter a | -0.51 | -0.50 |
| Hunter b | 1.9 | 1.8 |
| Gloss @60 deg | 2.3 | 2.3 |
| Sheen @85 deg | 5.2 | 4.6 |
| Tint Strength | 21.2 | 21.0 |

### Example 4: Preparation of a fine particle size kaolin

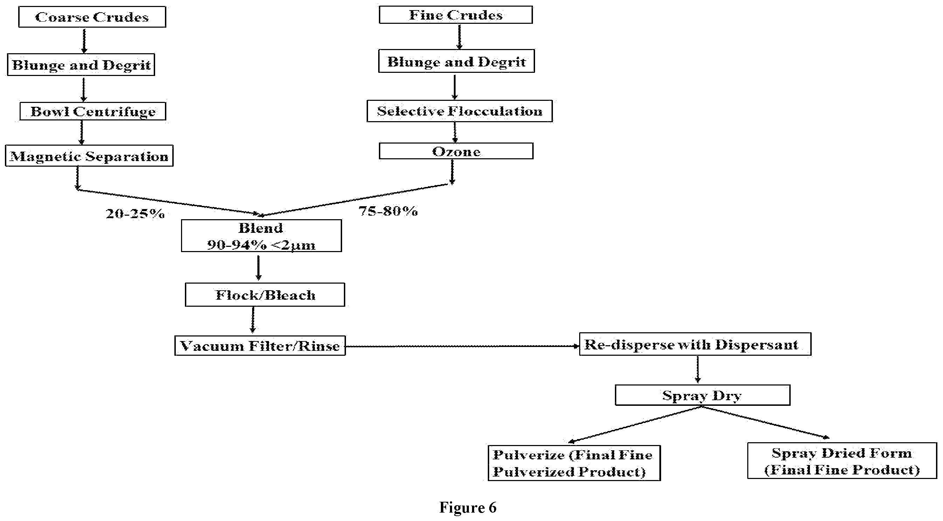

Example 4 describes the preparation of a fine particle size kaolin pigment from coarse and fine crudes, as shown in the process flowsheet in Figure 6.

*Introduction:* In this example, a processed coarse kaolin clay stream with 80-82% <2 micron particle size was blended with processed fine kaolin stream with 95-96% <2 micron particle size from about 20/80 up to 30/70 blend ratio to obtain a final inventive fine clay pigment with 90-94% <2 micron particle size. It is worth mentioning here that the blending of coarse and fine particle size streams can be employed at any point in the process to obtain the final inventive fine kaolin pigment: i.e., after the physical separation steps of processed streams; during or after reductive bleach process or after filtration/before spray drying.

The coarse kaolin clays utilized in this example can typically be white color as found in Middle Georgia deposits, whereas the fine clays consist of tertiary kaolin mined from the Middle Georgia or a tertiary kaolin mined from East Georgia area. These finely disseminated kaolin crudes can be found in mineral deposits with varying colors from grey, cream, brown, red, pink, brown, depending on the age of kaolin formation and type and level of impurities. The described method is a versatile to process and upgrade such kaolin crudes with varying colors and impurities. As part of this disclosure, ozone was found to be effective in processing high levels of gray crudes. In particular, gray crudes up to 80% or more (for example 100% gray crudes) can be processed within the fine clay stream to obtain final fine kaolin pigment. Ozone can be applied to both coarse and fine crude process streams to further remove impurities and enhance properties of final kaolin product (such as brightness). Ozone can be applied immediately after degritting or after the physical beneficiation steps such as selective flocculation or magnetic separation.

*Preparation of fine kaolin product:* In this example, coarse white crudes from Middle Georgia deposits were blunged at 60% by weight solids using a lab Waring blended equipped with 4L cell in the presence of sodium silicate and sodium polyacrylate dispersants to form a clay slurry. During the blunging step, the pH of the clay slurry was adjusted with soda ash to a target level of from 8.5 to 9.0 to form a clay slip. The clay slip was then degritted at 40% by weight solids using 200 mesh screen followed by centrifugation to obtain a target particle size of 75-80% by weight having <2 microns particle size as measured by Sedigraph Model 5100. The centrifuged product (fines fraction) was then subjected to magnetic separation to remove titania-ferrous impurities.

For the fine crude, a mixture of grey, cream, brown, red and pink color fine clay from Middle Georgia mines were blunged at 60% by weight solids using a lab Waring blended equipped with 4L cell in the presence of sodium silicate and sodium polyacrylate dispersants to form a clay slurry. During the blunging step, the pH of the clay slurry was adjusted to a target level of 10.0 to 10.5 with soda ash to form a clay slip. The clay slip was then degritted at 45% by weight solids using a 200 mesh screen followed by selective flocculation to obtain beneficiated fine kaolin stream. It should be noted that the fine crude alone can be processed to obtain premium brightness kaolin products or as fore mentioned, these crudes can be blends of various colored kaolin clays.

Prior to selective flocculation, the degritted clay slip was conditioned at 40-50% solids by weight to facilitate polymer absorption (a high molecular weight, anionic polyacrylamide) onto the titania-ferrous impurities during the selective flocculation step. During conditioning step, a small amount of low molecular weight sodium polyacrylate dispersant was added to the kaolin clay along with other conditioning chemicals (oleic acid and calcium chloride) to enhance the removal of discolored titania-ferrous impurities from clay particles and at the same time improve the kaolin recoveries during the selective flocculation process.

The feed solids to the selective separation vessel were then adjusted to 20% to allow settling of flocculated phase with the aid of polymer and to efficiently remove the discolored impurities from kaolin clay. The settling rate was kept at 7.5 minutes per inch. After settling was completed, a beneficiated kaolin product was obtained from the top, while flocculated discolored impurities were removed from the bottom of the selective flocculation equipment. Kaolin product was then subjected to ozone to remove any residual polymer and, also eliminate any organic components associated with the kaolin clay. In this example, surprisingly, it was found out that by using appropriate amounts of conditioning chemicals and sodium polyacrylate dispersant, as high as 70% or even 75% by weight kaolin recoveries could be achieved from selective flocculation, while maintaining above 90 GEB final bleached product brightness of fine clay stream.

The beneficiated coarse and fine kaolin product streams were then blended to a target particle size wherein 90-94% of particles by weight is <2 microns as measured by Sedigraph. In this example, a blend of 75% by weight fines and 25% by weight coarse stream provided the target particle size. The blended product was then flocked with sulfuric acid and alum at a pH of 2.8 to 3.0 and bleached with sodium hydrosulfite; filtered/rinsed, and re-dispersed with an appropriate dispersant. Re-dispersed filter product was then spray dried and the resulting spray dried product was pulverized using a Micro pulverizer equipped with 0.02" screen to obtain the final pulverized product.

Depending on the final end use of kaolin product, a wide range of dispersants such as sodium polyacrylate, ammonium polyacrylate, sodium hexametaphosphate, sodium tripolyphosphate, tetrasodium pyrophosphate, soda ash, caustic, ammonia and blends thereof can be used as the post filter dispersant before the spray drying step for producing fine kaolin pigment. Optionally, the pulverization step can be excluded and the spray dried pigment can be used in bead form as obtained in this example.

Table 7 summarizes the physical properties of the fine kaolin pigment obtained from Example 4. Included in this table are the physical properties of a control pigment (a commercial product) as obtained from the BASF manufacturing facilities for comparison. The control pigment is processed by flotation and other processing step. As shown in Table 7, the physical properties of the fine kaolin pigment are similar or improved compared to the control pigment.

The fine kaolin pigment was formulated as high gloss, eggshell, and flat paints. The paint application test results are summarized in Tables 8-10. As shown in Tables 8-10, the fine pigment provides similar optical properties compared to the control fine pigment.

**Table 7: Physical properties of fine pigment and control fine pigment.**

| Properties | **Inventive Fine Pigment** | **Control Fine Pigment** |
|---|---|---|
| TAPPI Brightness (%) | 91.2 | 90.7 |
| ISO Brightness (%) | 89.8 | 88.9 |
| Yellowness Index | 3.4 | 4.0 |
| Hunter | | |
| L | 96.5 | 96.0 |
| A | -0.21 | -0.43 |
| B | 2.29 | 2.69 |
| Surface Area (m²/g) | 21.2 | 20.9 |
| Sedigraph Particle Size Distribution | | |
| % <10 µm | 100 | 100 |
| % <5 µm | 98 | 99 |
| % <2 µm | 92 | 92 |
| % <1 µm | 84 | 85 |
| % <0.5 µm | 66 | 70 |
| % <0.4 µm | 56 | 60 |
| % <0.3 µm | 42 | 46 |
| % <0.2 µm | 23 | 28 |
| Average Particle Size, µm | 0.35 | 0.32 |
| Residue (%), +325 mesh | 0.0019 | 0.0082 |
| Oil Absorption (Spatula Rubout), % | 48.2 | 48.3 |
| TAPPI pH | 6.8 | 7.1 |
| TiO₂ (%) | 0.71 | 0.59 |
| Fe₂O₃ (%) | 0.70 | 0.81 |

**Table 8: High gloss paint application test results for the fine pigment.**

| **Properties** | **Inventive Fine Pigment** | **Control Fine Pigment** |
|---|---|---|
| Viscosity KUi @ 77 F : | 87 | 88 |
| KUe | 98 | 98 |
| ICI = | 1.28 | 1.28 |
| C.Ratio 3 mils: Xrite | 97.6 | 97.8 |
| Reflectance: Xrite | 91.82 | 91.75 |
| Whiteness: Xrite | 86.22 | 86.14 |
| Yellowness: Xrite | 1.80 | 1.80 |
| Hunter L: Xrite | 97.37 | 97.35 |
| Hunter a: Xrite | -0.74 | -0.73 |
| Hunter b: Xrite | 1.58 | 1.58 |
| Gloss @ 20 deg: | 43.8 | 44.2 |
| Gloss @ 60 deg: | 76.3 | 76.6 |
| Sheen @ 85 deg: | 93.4 | 93.6 |
| Tint Strength: Xrite | 99 | 100.0 |
| Draw down visual comparisons | | |
| Untinted | appears similar | CTL |
| Ability to filter | Ok | Ok |

**Table 9: Eggshell paint application test results for the fine pigment.**

| **Properties** | **Inventive Fine Pigment** | **Control Fine Pigment** |
|---|---|---|
| Viscosity KUi @ 77 F : | 84 | 85 |
| KUe | 105 | 103 |
| Contrast Ratio 3 mils: | 98.8 | 98.7 |
| Brightness: | 90.82 | 90.62 |
| Whiteness: | 83.01 | 82.91 |
| Yellowness: | 2.59 | 2.56 |
| Hunter L: | 97.24 | 97.15 |
| Hunter a: | -0.52 | -0.52 |
| Hunter b: | 2.01 | 1.99 |
| Gloss @ 20 deg: | 1.4 | 1.4 |
| Gloss @ 60 deg: | 4.9 | 4.4 |
| Sheen @ 85 deg: | 26.5 | 24.1 |
| Gloss of tinted paint: | | |
| Gloss @ 20 deg: | 1.0 | 1.0 |
| Gloss @ 60 deg: | 4.2 | 3.7 |
| Sheen @ 85 deg: | 24.9 | 22.3 |
| Tint Strength: Xrite | 99.6 | 100.0 |
| Filter notes | ok | ok |

**Table 10: Flat paint application test results at 65% PVC for the fine pigment.**

| **Properties** | **Inventive Fine Pigment** | **Control Fine Pigment** |
|---|---|---|
| Viscosity KUi @ 77 F : | 85 | 85 |
| KUe | 95 | 94 |
| Contrast Ratio 3 mils: | 89.3 | 89.0 |
| Brightness: | 83.05 | 82.80 |
| Whiteness: | 70.74 | 70.35 |
| Yellowness: | 4.50 | 4.57 |
| Hunter L: | 94.58 | 94.49 |
| Hunter a: | -0.70 | -0.68 |
| Hunter b: | 3.22 | 3.26 |
| Gloss @ 20 deg: | 1.3 | 1.3 |
| Gloss @ 60 deg: | 2.2 | 2.1 |
| Sheen @ 85 deg: | 1.0 | 1.0 |
| Tint Strength: | 101.1 | 100.1 |

### Example 5: Preparation of an ultrafine particle size kaolin pigment.

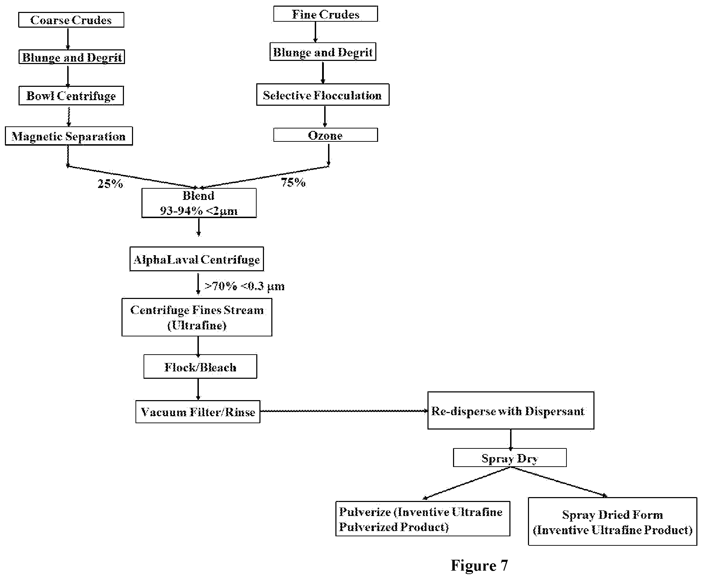

Example 5 describes the preparation process of an ultrafine particle size kaolin pigment from coarse and fine crudes (the process flowsheet is shown in Figure 7). Fine and coarse streams (prior to blending) were obtained as described in Example 4. The fine and coarse streams were blended to a nominal 93-94% by weight having <2 microns particle size, that is, the coarse kaolin stream and fine kaolin stream were combined in a weight ratio of 25/75. In general, the fine and coarse streams can be blended to a nominal particle size wherein 80-96% by weight are <2 microns. The blend was then centrifuged using a discnozzle centrifuge (AlphaLaval) to obtain an ultrafine stream of at least 70% by weight having <0.3 microns particle size.

The ultrafine stream obtained from the AlphaLaval centrifuge with at least 70% finer than 0.3 microns particle size was flocked with sulfuric acid and alum at a pH of from 2.8 to 2.9 and then bleached with sodium hydrosulfite, filtered/rinsed, and re-dispersed with the use of a dispersant (as described in Example 4) at pH=∼7.5 (a typical pH range can be from 6.0 to 8.0). The re-dispersed filter product was then spray dried and the resulting spray dried product was pulverized using the Micro pulverizer equipped with 0.02" screen to obtain the final pulverized product. In some applications, the spray dried ultrafine pigment can be used in in this form without the pulverization step.

The physical properties of inventive ultrafine kaolin pigment are summarized in Table 11. Included in this table are the physical properties of a control ultrafine pigment. As shown in this table, physical properties of inventive ultrafine clay pigment are similar as compared to the control pigment, brightness value of inventive fine pigment being somewhat higher than the control pigment.

Table 11 provides the physical properties of inventive ultrafine kaolin pigment obtained from above mentioned example. Included in this table are the physical properties of a control pigment (a commercial product) as obtained from the BASF manufacturing facilities for comparison. The control pigment is processed by flotation and other processing step. As shown in Table 11, the physical properties of the ultrafine kaolin pigment was similar or improved compared to the control pigment.

The ultrafine kaolin pigment was formulated as high gloss and semi-gloss paints. The paint application test results are summarized in Tables 12 and 13. As shown in Tables 12 and 13, the ultrafine pigment provides similar optical properties compared to the control ultrafine pigment.

**Table 11: Physical properties of final kaolin ultrafine pigment.**

| **Properties** | **Inventive Ultrafine Pigment** | **Control Ultrafine Pigment** |
|---|---|---|
| TAPPI Brightness (%) | 91.0 | 90.4 |
| ISO Brightness (%) | 89.4 | 88.8 |
| Yellowness Index | 3.6 | 3.7 |
| Hunter | | |
| L | 96.1 | 95.9 |
| a | -0.21 | -0.36 |
| b | 2.22 | 2.33 |
| Surface Area (m²/g) | 24.5 | 24.9 |
| Sedigraph Particle Size Distribution | | |
| % <10 µm | 100 | 100 |
| % <5 µm | 100 | 99 |
| % <2 µm | 100 | 97 |
| % <1 µm | 99 | 96 |
| % <0.5 µm | 93 | 89 |
| % <0.4 µm | 85 | 83 |
| % <0.3 µm | 71 | 70 |
| % <0.2 µm | 47 | 49 |
| Average Particle Size, µm | 0.21 | 0.21 |
| Residue (%), +325 mesh | 0.0016 | 0.0020 |
| TAPPI pH | 7.6 | 6.8 |
| TiO₂ (%) | 0.71 | 0.57 |
| Fe₂O₃ (%) | 0.76 | 0.84 |

**Table 12: High gloss paint application test results for the inventive ultrafine pigment.**

| **Properties** | **Inventive Ultrafine Pigment** | **Control Ultrafine Pigment** |
|---|---|---|
| Viscosity KUi @ 77 F : | 85 | 87 |
| KUe | 94 | 98 |
| ICI = | 1.25 | 1.28 |
| C.Ratio 3 mils: Xrite | 97.4 | 97.5 |
| Reflectance: Xrite | 91.89 | 91.77 |
| Whiteness: Xrite | 85.99 | 86.09 |
| Yellowness: Xrite | 1.91 | 1.82 |
| Hunter L: Xrite | 97.44 | 97.37 |
| Hunter a: Xrite | -0.72 | -0.72 |
| Hunter b: Xrite | 1.65 | 1.59 |
| Gloss @ 20 deg: | 57.3 | 55.2 |
| Gloss @ 60 deg: | 83.6 | 82.3 |
| Sheen @ 85 deg: | 95.3 | 95.0 |
| Tint Strength: Xrite | 99.5 | 99.9 |

**Table 13: Semi gloss paint application test results for the inventive ultrafine pigment.**

| **Properties** | **Inventive Ultrafine Pigment** | **Control Ultrafine Pigment** |
|---|---|---|
| Viscosity KUi @ 77 F : | 88 | 87 |
| KUe | 102 | 100 |
| ICI = | 0.50 | 0.50 |
| C.Ratio 3 mils: Xrite | 97.6 | 97.7 |
| Reflectance: Xrite | 90.90 | 90.95 |
| Whiteness: Xrite | 84.06 | 84.68 |
| Yellowness: Xrite | 2.26 | 2.05 |
| Hunter L: Xrite | 97.15 | 97.11 |
| Hunter a: Xrite | -0.66 | -0.62 |
| Hunter b: Xrite | 1.84 | 1.70 |
| Gloss @ 20 deg: | 13.3 | 12.8 |
| Gloss @ 60 deg: | 52.8 | 51.2 |
| Sheen @ 85 deg: | 88.3 | 87.5 |
| Tint Strength: Xrite | 99.0 | 100.0 |

## Claims

1. A method of forming an ultrafine hydrous kaolin clay, the method comprising:
(i) refining a tertiary, fine crude kaolin clay having a first alkali content, to form an ultrafine, hydrous kaolin stream having particles wherein at least 90% of the particles by weight have a diameter of 1 micron or less, wherein refining the tertiary, fine crude kaolin clay comprises selective flocculation and ozonating, wherein the ultrafine hydrous kaolin stream has a second alkali content that is less than the first alkali content, particles wherein at least 70% by weight have a diameter of 0.3 micron or less, and an average crystallite size of 400 Å or less; and
(ii) refining the ultrafine hydrous kaolin stream into an ultrafine hydrous kaolin clay using flocculation, bleaching, filtering, re-dispersing, spray drying, pulverizing, or combinations thereof, and wherein the ultrafine hydrous kaolin clay has a total alkali content of 0.2% or less by weight of the ultrafine hydrous kaolin clay.

2. The method of claim 1, wherein refining the tertiary, fine crude kaolin clay includes centrifuging.

3. The method of any one of claims 1 or 2, further comprising blending the ultrafine hydrous kaolin stream with a refined, delaminated, coarse kaolin clay, prior to refining the ultrafine hydrous kaolin stream, wherein the refined, delaminated, coarse kaolin clay has particles wherein at least 80% of the particles by weight have a diameter of 2 microns or less.

4. The method of any one of claims 1-3, wherein the ultrafine hydrous kaolin clay has a total alkali content of 0.15% by weight or less, based on the total weight of the ultrafine hydrous kaolin clay.

5. The method of any one of claims 1-4, wherein the particles in the ultrafine hydrous kaolin stream exhibit an average crystallite size of from 200 Å to 400 Å.

6. A method of making a cordierite ceramic, comprising:
(a) preparing a precursor cordierite batch composition comprising an ultrafine hydrous kaolin clay produced from the method according to any one of claims 1-5;
(b) extruding the precursor cordierite batch composition into a green body; and
(c) sintering the green body to obtain the cordierite ceramic.

7. A cordierite ceramic formed the method according to claim 6, wherein the cordierite ceramic exhibits a coefficient of thermal expansion (25°C to 800°C) of 1.25 x 10⁻⁶/°C or less.

8. A composition comprising an ultrafine hydrous kaolin clay produced from the method according to any one of claims 1-6.

9. The composition of claim 8, wherein the composition is a paint selected from a high gloss paint, a semi-gloss paint, an eggshell paint or a flat paint.

10. A kaolin clay, comprising:
a refined, hydrous kaolin clay, wherein at least 70% by weight of the particles in the clay have a diameter of 0.3 micron or less, and an average crystallite size of 300 Å or less,
wherein the kaolin clay has a total alkali content of 0.2% by weight or less, based on the total weight of the kaolin clay.

11. The kaolin clay of claim 10, wherein the kaolin clay is free of or comprises a trace amount of organic acid.

12. The kaolin clay of claim 10, further comprising a delaminated, coarse kaolin clay.

13. The kaolin clay of any one of claims 10-12, wherein the kaolin clay has a sodium oxide content of 0.05% by weight or less, and a potassium oxide content of 0.10% by weight or less, based on the total weight of the kaolin clay.

14. The kaolin clay of any one of claims 10-13, wherein at least 92% by weight of the particles in the clay have a diameter of 2 microns or less.

15. A method of forming an ultrafine hydrous kaolin clay, the method comprising:
(a) refining a tertiary, fine gray crude kaolin clay having a first alkali content greater than 0.2% by weight of the tertiary, fine gray, crude kaolin clay, to form a refined, fine, hydrous kaolin clay having particles wherein at least 90% of the particles by weight have a diameter of 1 micron or less, wherein refining the tertiary, fine gray crude kaolin clay comprises selective flocculation and ozonating to provide the refined, fine, hydrous kaolin clay having a second alkali content that is less than the first alkali content;
(b) blending the refined, fine, hydrous kaolin clay with a clay derived from a yellow, pink, brown, tan, and/or red kaolin clay crude in a weight ratio of from 95:5 to 5:95 to form a blend wherein at least 80% of the particles by weight have a diameter of less than 2 microns; and
(c) refining the blend into an ultrafine hydrous kaolin clay having a total alkali content of 0.2% or less by weight of the ultrafine hydrous kaolin clay.

## Patentansprüche

1. Verfahren zur Bildung eines ultrafeinen wasserhaltigen Kaolintons, wobei man bei dem Verfahren:
(i)einen tertiären, feinen Rohkaolinton mit einem ersten Alkaligehalt zur Bildung eines teilchenhaltigen ultrafeinen wasserhaltigen Kaolinstroms aufbereitet, wobei mindestens 90 Gew.-% der Teilchen einen Durchmesser von 1 Mikron oder weniger aufweisen, wobei man beim Aufbereiten des tertiären, feinen Rohkaolintons selektiv flockt und ozoniert, wobei der ultrafeine wasserhaltige Kaolinstrom einen zweiten Alkaligehalt, der geringer ist als der erste Alkaligehalt, Teilchen, von denen mindestens 70 Gew.-% einen Durchmesser von 0,3 Mikron oder weniger aufweisen, und eine durchschnittliche Kristallitgröße von 400 Å oder weniger aufweist; und
(ii) den ultrafeinen wasserhaltigen Kaolinstrom mittels Flockung, Bleichen, Filtrieren, Redispergieren, Sprühtrocknen, Zerstäuben oder Kombinationen davon zu einem ultrafeinen wasserhaltigen Kaolinton aufbereitet und wobei der ultrafeine wasserhaltige Kaolinton einen Gesamtalkaligehalt von 0,2 Gew.-% oder weniger des ultrafeinen wasserhaltigen Kaolintons aufweist.

2. Verfahren nach Anspruch 1, bei dem das Aufbereiten des tertiären, feinen Rohkaolintons Zentrifugieren einschließt.

3. Verfahren nach einem der Ansprüche 1 oder 2, bei dem man den ultrafeinen wasserhaltigen Kaolinstrom ferner vor dem Aufbereiten des ultrafeinen wasserhaltigen Kaolinstroms mit einem aufbereiteten, entschichteten, groben Kaolinton vermischt, wobei der aufbereitete, entschichtete, grobe Kaolinton Teilchen aufweist, von denen mindestens 80 Gew.-% der Teilchen einen Durchmesser von 2 Mikron oder weniger aufweisen.

4. Verfahren nach einem der Ansprüche 1-3, bei dem der ultrafeine wasserhaltige Kaolinton einen Gesamtalkaligehalt von 0,15 Gew.-% oder weniger, bezogen auf das Gesamtgewicht des ultrafeinen wasserhaltigen Kaolintons, aufweist.

5. Verfahren nach einem der Ansprüche 1-4, bei dem die Teilchen in dem ultrafeinen wasserhaltigen Kaolinstrom eine durchschnittliche Kristallitgröße von 200 Å bis 400 Å besitzen.

6. Verfahren zur Herstellung einer Cordieritkeramik, bei dem man:
(a)eine Vorläufercordieritchargenzusammensetzung, die einen durch das Verfahren gemäß einem der Ansprüche 1-5 produzierten ultrafeinen wasserhaltigen Kaolinton umfasst, herstellt;
(b) die Vorläufercordieritchargenzusammensetzung zu einem Grünling extrudiert; und
(c) den Grünling zum Erhalt der Cordieritkeramik sintert.

7. Gemäß dem Verfahren nach Anspruch 6 gebildete Cordieritkeramik, wobei die Cordieritkeramik einen thermischen Ausdehnungskoeffizient (25 °C bis 800 °C) von 1,25 x 10⁻⁶/°C oder weniger besitzt.

8. Zusammensetzung, die einen durch das Verfahren gemäß einem der Ansprüche 1-6 produzierten ultrafeinen wasserhaltigen Kaolinton umfasst.

9. Zusammensetzung nach Anspruch 8, wobei es sich bei der Zusammensetzung um ein Anstrichmittel handelt, das aus einem Hochglanzanstrichmittel, einem Halbglanzanstrichmittel, einem Eierschaleneffektanstrichmittel oder einem matten Anstrichmittel ausgewählt ist.

10. Kaolinton, der Folgendes umfasst:
einen aufbereiteten, wasserhaltigen Kaolinton, wobei mindestens 70 Gew.-% der Teilchen in dem Ton einen Durchmesser von 0,3 Mikron oder weniger und eine durchschnittliche Kristallitgröße von 300 Ä oder weniger aufweisen,
wobei der Kaolinton einen Gesamtalkaligehalt von 0,2 Gew.-% oder weniger, bezogen auf das Gesamtgewicht des Kaolintons, aufweist.

11. Kaolinton nach Anspruch 10, wobei der Kaolinton frei von einer organischen Säure ist oder Spurenmengen davon umfasst.

12. Kaolinton nach Anspruch 10, der ferner einen entschichteten, groben Kaolinton umfasst.

13. Kaolinton nach einem der Ansprüche 10-12, wobei der Kaolinton einen Natriumoxidgehalt von 0,05 Gew.-% oder weniger und einen Kaliumoxidgehalt von 0,10 Gew.-% oder weniger, bezogen auf das Gesamtgewicht des Kaolintons, aufweist.

14. Kaolinton nach einem der Ansprüche 10-13, wobei mindestens 92 Gew.-% der Teilchen in dem Ton einen Durchmesser von 2 Mikron oder weniger aufweisen.

15. Verfahren zur Bildung eines ultrafeinen wasserhaltigen Kaolintons, wobei man bei dem Verfahren:
(a)einen tertiären, feinen grauen Rohkaolinton mit einem ersten Alkaligehalt von mehr als 0,2 Gew.-% des tertiären, feinen grauen Rohkaolintons zur Bildung eines aufbereiteten, feinen, wasserhaltigen Kaolintons mit Teilchen, von denen mindestens 90 Gew.-% der Teilchen einen Durchmesser von 1 Mikron oder weniger aufweisen, aufbereitet, wobei man beim Aufbereiten des tertiären, feinen grauen Rohkaolintons zur Bereitstellung des aufbereiteten feinen wasserhaltigen Kaolintons mit einem zweiten Alkaligehalt, der geringer ist als der erste Alkaligehalt, selektiv flockt und ozoniert;
(b)den aufbereiteten feinen wasserhaltigen Kaolinton mit einem sich von einem gelben, rosafarbigen, braunen, hellbraunen und/oder roten Rohkaolinton ableitenden Ton in einem Gewichtsverhältnis von 95:5 bis 5:95 zur Bildung einer Mischung, bei der mindestens 80 Gew.-% der Teilchen einen Durchmesser von weniger als 2 Mikron aufweisen, vermischt; und
(c)die Mischung zu einem ultrafeinen wasserhaltigen Kaolinton mit einem Gesamtalkaligehalt von 0,2 Gew.-% oder weniger des ultrafeinen wasserhaltigen Kaolintons aufbereitet.

## Revendications

1. Procédé de formation d'une argile de kaolin hydraté ultrafin, le procédé comprenant :
(i) le raffinage d'une argile de kaolin brut fin, tertiaire possédant une première teneur en alcali, pour former un flux de kaolin hydraté, ultrafin possédant des particules, au moins 90 % des particules en poids possédant un diamètre de 1 micron ou moins, le raffinage de l'argile de kaolin brut fin, tertiaire comprenant une floculation sélective et un traitement à l'ozone, le flux de kaolin hydraté ultrafin possédant une deuxième teneur en alcali qui est inférieure à la première teneur en alcali, des particules dans lesquelles au moins 70 % en poids possèdent un diamètre de 0,3 micron ou moins, et une taille moyenne de cristallite de 400 Å ou moins ; et
(ii) le raffinage du flux de kaolin hydraté ultrafin pour donner une argile de kaolin hydraté ultrafin par floculation, blanchiment, filtration, redispersion, séchage par pulvérisation, pulvérisation, ou des combinaisons correspondantes, et l'argile de kaolin hydraté ultrafin possédant une teneur totale en alcali de 0,2 % ou moins en poids de l'argile de kaolin hydraté ultrafin.

2. Procédé selon la revendication 1, le raffinage de l'argile de kaolin brut fin, tertiaire comportant une centrifugation.

3. Procédé selon l'une quelconque des revendications 1 et 2, comprenant en outre le mélange du flux de kaolin hydraté ultrafin avec une argile de kaolin grossier, délaminé, raffiné, avant le raffinage du flux de kaolin hydraté ultrafin, l'argile de kaolin grossier, délaminé, raffiné possédant des particules dans lesquelles au moins 80 % des particules en poids possèdent un diamètre de 2 microns au moins.

4. Procédé selon l'une quelconque des revendications 1 à 3, l'argile de kaolin hydraté ultrafin possédant une teneur totale en alcali de 0,15 % en poids ou moins, sur la base du poids total de l'argile de kaolin hydraté ultrafin.

5. Procédé selon l'une quelconque des revendications 1 à 4, les particules dans le flux de kaolin hydraté ultrafin présentant une taille moyenne de cristallite allant de 200 Å à 400 Å.

6. Procédé de fabrication d'une céramique de cordiérite, comprenant :
(a) la préparation d'une composition de lot de cordiérite précurseur comprenant une argile de kaolin hydraté ultrafin produite à partir du procédé selon l'une quelconque des revendications 1 à 5 ;
(b) l'extrusion de la composition de lot de cordiérite précurseur pour donner un corps vert ; et
(c) le frittage du corps vert pour obtenir la céramique de cordiérite.

7. Céramique de cordiérite formée par le procédé selon la revendication 6, la céramique de cordiérite présentant un coefficient d'expansion thermique (25 °C à 800 °C) de 1,25 x 10⁻⁶/°C ou moins.

8. Composition comprenant une argile de kaolin hydraté ultrafin produite à partir du procédé selon l'une quelconque des revendications 1 à 6.

9. Composition selon la revendication 8, la composition étant une peinture choisie parmi une peinture de haute brillance, une peinture semibrillante, une peinture coquille d'œuf ou une peinture mate.

10. Argile de kaolin, comprenant :
une argile de kaolin hydraté, raffiné, au moins 70 % en poids des particules dans l'argile possédant un diamètre de 0,3 micron ou moins, et une taille moyenne de cristallite de 300 Å ou moins,
l'argile de kaolin possédant une teneur totale en alcali de 0,2 % en poids ou moins, sur la base du poids total de l'argile de kaolin.

11. Argile de kaolin selon la revendication 10, l'argile de kaolin étant exempte, ou comprenant des traces, d'acide organique.

12. Argile de kaolin selon la revendication 10, comprenant en outre une argile de kaolin grossier, délaminé.

13. Argile de kaolin selon l'une quelconque des revendications 10 à 12, l'argile de kaolin possédant une teneur en oxyde de sodium de 0,05 % en poids ou moins, et une teneur en oxyde de potassium de 0,10 % en poids ou moins, sur la base du poids total de l'argile de kaolin.

14. Argile de kaolin selon l'une quelconque des revendications 10 à 13, au moins 92 % en poids des particules dans l'argile possédant un diamètre de 2 microns ou moins.

15. Procédé de formation d'une argile de kaolin hydraté ultrafin, le procédé comprenant :
(a) le raffinage d'une argile de kaolin brut gris fin, tertiaire possédant une première teneur en alcali supérieure à 0,2 % en poids de l'argile de kaolin brut, gris fin, tertiaire, pour former une argile de kaolin hydraté, fin, raffiné possédant des particules dans lesquelles au moins 90 % des particules en poids possèdent un diamètre de 1 micron ou moins, le raffinage de l'argile de kaolin brut gris fin, tertiaire comprenant une floculation sélective et un traitement à l'ozone pour fournir l'argile de kaolin hydraté, fin, raffiné possédant une deuxième teneur en alcali qui est inférieure à la première teneur en alcali ;
(b) le mélange de l'argile de kaolin hydraté, fin, raffiné avec une argile issue d'un brut d'argile de kaolin jaune, rose, brun, fauve, et/ou rouge dans un rapport en poids allant de 95 : 5 à 5 : 95 pour former un mélange dans lequel au moins 80 % des particules en poids possèdent un diamètre inférieur à 2 microns ; et
(c) le raffinage du mélange pour donner une argile de kaolin hydraté ultrafin possédant une teneur totale en alcali de 0,2 % ou moins en poids de l'argile de kaolin hydraté ultrafin.
